# EUROPÄISCHE PATENTANMELDUNG

(11) **EP 2 957 160 A1**
(43) Veröffentlichungstag der Anmeldung: **23.12.2015**
(21) Anmeldenummer: 15401052.4
(22) Anmeldetag: 01.06.2015
(51) Int. Cl.: A01B 79/00, G05D 1/02

(54) **ELEKTRONISCHES ZEITMANAGEMENTSYSTEM EINER LANDWIRTSCHAFTLICHEN ARBEITSMASCHINE**

(30) Priorität: 20.06.2014 DE 102014108644
(71) Anmelder: Amazonen-Werke H. Dreyer GmbH & Co. KG, 49205 Hasbergen (DE)
(72) Erfinder: Sia, Tim-Randy, 49179 Ostercappeln (DE)

(57) **Zusammenfassung**

Elektronisches Zeitmanagementsystem einer landwirtschaftlichen Arbeitsmaschine, umfassend ein Positionsmodul zum Erfassen einer Position der landwirtschaftlichen Arbeitsmaschine über einen Zeitraum, dadurch gekennzeichnet, dass den Zeitraum sowie die überfahrene Fläche automatisch dokumentiert.

## Beschreibung

Die vorliegende Erfindung betrifft ein elektronisches Zeitmanagementsystem gemäß Oberbegriff von Anspruch 1 und ein Zeitmanagementverfahren gemäß Oberbegriff von Anspruch 13.

Aufgrund gesetzlicher Regelungen in vielen Staaten besteht eine Dokumentationspflicht für landwirtschaftliche Betriebe mit Hinblick auf die von ihnen verwendeten Düngemittel. Dabei ist es im Rahmen dieser Pflichten relevant, wann welches Düngemittel ausgebracht wurde und welche Menge auf dem Feld verteilt wurde. Diese Dokumentationspflicht wird von unterschiedlich großen Betrieben teils sehr unterschiedlich gehandhabt.

So wird in großen landwirtschaftlichen Betrieben meist eine zentrale Aufgabenplanung vorgegeben, nach der bestimmte Felder bearbeitet werden sollen. Dazu zählt beispielsweise das Ausbringen von Dünger oder Spritzmittel. Diese werden einzelnen Mitarbeitern zugeteilt. Die Dokumentation der Arbeitsabläufe steht somit schon vor der eigentlichen Ausführung der Arbeitsabläufe fest. Dabei wird auch erfasst, welche Menge Düngemittel erwartungsgemäß ausgebracht wird. Diese Dokumentation kann jedoch fehlerbehaftet sein, da beispielsweise durch plötzliche Änderungen der Bedingungen, wie beispielsweise Defekte der Arbeitsmaschinen oder Wetterveränderungen Änderungen notwendig werden können.

Im Gegensatz dazu ist beispielsweise von kleineren landwirtschaftlichen Betrieben bekannt, dass diese Dokumentation nur in relativ geringem Umfang erfolgt, beispielsweise indem der Betreiber des Betriebs vermerkt, an welchem Datum welches Düngemittel auf einem seiner Felder zum Einsatz kam. Diese Daten sind teils wenig aussagekräftig und halten betrieblichen Prüfungen kaum stand.

Beide bekannten Varianten sind fehleranfällig. Dies trifft insbesondere dann zu, wenn die eigentliche Planung von einem Mitarbeiter durchgeführt wird, da hier immer Fehler auftreten können. Auch die Berücksichtigung unvorhersehbarer Ereignisse gestaltet sich als schwierig. Neben den offensichtlichen Problemen, der Dokumentationspflicht in möglichst vollem Umfang nachzukommen, ergibt sich weiterhin ein ökologisches Problem, da mögliche Umweltschäden durch zu hohe Düngemittelbelastung schwerer abschätzbar sind.

Ausgehend vom bekannten Stand der Technik ist es daher Aufgabe der vorliegenden Erfindung, ein elektronisches Zeitmanagementsystem für eine landwirtschaftliche Arbeitsmaschine bereitzustellen, das insbesondere die Dokumentation von Arbeitsabläufen vereinfacht.

Diese Aufgabe wird erfindungsgemäß durch das elektronische Zeitmanagementsystem nach Anspruch 1 und das Zeitmanagementverfahren nach Anspruch 13 gelöst. Vorteilhafte Weiterbildungen der Erfindung sind in den Unteransprüchen erfasst.

Das erfindungsgemäße elektronische Zeitmanagementsystem ist dadurch gekennzeichnet, dass das Zeitmanagementsystem auf Grundlage der erfassten Position einem Zeitraum die überfahrene und damit einhergehend bearbeitete Fläche zuordnen kann. Erfindungsgemäß kann so bereits während der Durchführung der einzelnen Arbeitsschritte eine Dokumentation stattfinden, die sich an dem entsprechenden Ort, an dem ein bestimmter Arbeitsschritt durchgeführt wird, orientiert. Dabei umfasst der Zeitraum, in dem die Position gemessen wird, beispielsweise die gesamte Zeit nach Einschalten der Arbeitsmaschine bis zum Ausschalten der Arbeitsmaschine. Somit wird eine Automatisierung der Dokumentation erreicht

In verschiedenen Ausführungsformen wird der jeweilige Betriebs- oder Arbeitsmodus der Arbeitsmaschine zusammen mit der bearbeiteten Fläche und dem dem jeweiligen Betriebsmodus zugeordneten Zeitraum bzw. Zeitintervall innerhalb des Zeitraumes erfasst.

Der Arbeitsmodus gibt beispielsweise an, ob in dem betreffenden Zeitintervall ein Feld bearbeitet wurde oder ob die landwirtschaftliche Arbeitsmaschine sich in einem Ruhemodus oder in einer Pause befindet oder ob gerade ein Saatgut- oder Düngemittelbehälter aufgefüllt wird.

Je nach Ausführungsform kann der Arbeitsmodus dem elektronischen Zeitmanagementsystem manuell über den Benutzer mitgeteilt werden. Auch ist eine positionsbezogene Bestimmung des Arbeitsmodus je nach Aufenthaltsort der Arbeitsmaschine denkbar.

In einer Ausführungsform ist das elektronische Zeitmanagementsystem dadurch gekennzeichnet, dass das Positionsmodul einen GPS-Sensor umfasst. GPS-Sensoren erlauben eine Bestimmung der Position mit hoher Genauigkeit.

Es kann vorgesehen sein, dass das Positionsmodul einen Geschwindigkeitssensor und/oder einen Beschleunigungssensor umfasst und das Zeitmanagementsystem basierend auf der erfassten Geschwindigkeit und/oder der erfassten Beschleunigung den Arbeitsmodus bestimmen kann. Diese zusätzlichen Informationen können genutzt werden, um den Arbeitsmodus noch genauer zu bestimmen.

In einer weiteren Ausführungsform ist das erfindungsgemäße elektronische Zeitmanagementsystem dadurch gekennzeichnet, dass dem elektronischen Zeitmanagementsystem manuell und/oder elektronisch Informationen über ein mit der Arbeitsmaschine während des Zeitraums verbundenes Arbeitsgerät übermittelt werden kann und das elektronische Maschinenmanagementsystem dem wenigstens einen Zeitintervall basierend auf der Information über das Arbeitsgerät einen Arbeitsmodus zuordnet. Dies gestattet eine detailliertere Angabe des Arbeitsmodus. So kann z.B. angegeben werden, dass die landwirtschaftliche Arbeitsmaschine nicht nur eine Feldbearbeitung durchführt sondern auch angegeben werden, dass die Feldbearbeitung das Ausbringen von Düngemittel oder Saatgut oder das Umpflügen des Feldes umfasst.

Weiterhin kann dem elektronischen Zeitmanagementsystem ein nichtflüchtiger Speicher zugeordnet sein, in dem die Zeitintervalle und die zugeordneten Arbeitsmodi gespeichert werden können. Dies erlaubt die spätere Übernahme dieser Dokumentation auf einen anderen Computer und kann für weitere Zwecke verwendet werden.

Es kann auch vorgesehen sein, dass ein Mengensensor vorgesehen ist, der eine Menge an auf ein Feld ausgebrachtem Material messen kann, wobei der Arbeitsmodus dem Zeitintervall in Abhängigkeit des ausgebrachten Materials und/oder der ausgebrachten Menge zugeordnet werden kann. In dieser Ausführungsform ist es möglich, nicht nur anzugeben, dass die Arbeitsmaschine eine bestimmte Arbeit verrichtet hat, beispielsweise Saatgut auf dem Feld ausgebracht hat, sondern auch, wie viel Saatgut ausgebracht wurde und diese Information zu dokumentieren.

In einer Weiterbildung der Erfindung ist das elektronische Zeitmanagementsystem dadurch gekennzeichnet, dass dem Zeitmanagementsystem ein optischer Sensor zugeordnet ist, der den Pflanzenbestand erfassen kann und das Zeitmanagementsystem dem wenigstens einen Zeitintervall den Arbeitsmodus basierend auf dem erfassten Pflanzenbestand zuordnen kann. Eine zusätzliche Information über den Pflanzenbestand kann vom Bediener der landwirtschaftlichen Arbeitsmaschine in vorteilhafter Weise genutzt werden, um beispielsweise später rechtfertigen zu können, warum eine gewisse Menge an Dünger oder eine sonstige Feldbearbeitung bei dem entsprechenden Pflanzenbestand und zu der gegebenen Zeit notwendig war.

Weiterhin ist vorgesehen zur Dokumentation der Arbeitsprozesse Wetterinformationen zu speichern. Diese können von an dem Zugfahrzeug angebrachten Instrumenten, wie beispielsweise Thermometer oder Regensensor oder über das Internet bezogen werden.

Außerdem kann vorgesehen sein Daten über die Bodenbeschaffenheit, welche zum Beispiel mit einem Sensor zur Messung der Stickstoffkonzentration aufgenommen wurde, der Dokumentation hinzuzufügen.

Das erfindungsgemäße Zeitmanagementverfahren ist dadurch gekennzeichnet, dass die während eines Zeitraumes überfahrene bzw. bearbeitete Fläche gespeichert wird. Dieses Verfahren erlaubt eine deutlich effektivere Dokumentation der Arbeitsabläufe.

Zusätzlich kann in einer Ausführungsform der jeweilige Arbeitsmodus der Arbeitsmaschine dokumentiert werden.

Es ist vorteilhaft, wenn dem Zeitmanagementsystem über manuelle Eingabe und/oder elektronisch Informationen über das Arbeitsgerät übermittelt werden und der Arbeitsmodus dem wenigstens einen Zeitintervall in Abhängigkeit der Informationen zugeordnet wird.

In einer Weiterbildung ist vorgesehen, dass die Geschwindigkeit und/oder die Beschleunigung der Arbeitsmaschine innerhalb des Zeitraums erfasst wird und der Arbeitsmodus basierend auf der erfassten Geschwindigkeit und/oder der erfassten Beschleunigung dem wenigstens einen Zeitintervall zugeordnet wird.

In einer Ausführungsform ist vorgesehen, dass der Arbeitsmodus eines von Feldbearbeitung, Pause, Fahren, Beladen des Arbeitsgeräts ist. Verschiedene Arbeitsabläufe bzw. verschiedene Arbeitsmodi, die von einer landwirtschaftlichen Arbeitsmaschine durchgeführt werden können, können in dieser Ausführungsform zumindest grob eingeteilt werden.

Es ist vorteilhaft, wenn dem Zeitmanagementsystem über manuelle Eingabe und/oder elektronisch Informationen über das Arbeitsgerät übermittelt werden und der Arbeitsmodus dem wenigstens einen Zeitintervall in Abhängigkeit der Informationen zugeordnet wird. Diese zusätzliche Information kann genutzt werden, um die angegebenen Arbeitsmodi beispielsweise in der vorherigen Ausführungsform weiter zu präzisieren.

Ferner können die Zeitintervalle und der ihnen jeweils zugeordnete Arbeitsmodus in einem nichtflüchtigen Speicher gespeichert werden. Der Bediener kann auf die gespeicherten Daten so zu einem späteren Zeitpunkt zugreifen und sie weiter bearbeiten.

In einer Ausführungsform ist vorgesehen, dass innerhalb des Zeitraums eine Menge an ausgebrachtem Material bestimmt wird und dem Zeitintervall zugeordnet wird. Diese Ausführungsform erlaubt eine noch genauere Dokumentation der Arbeitsabläufe.

In einer Weiterbildung dieser Ausführungsform wird der Arbeitsmodus dem wenigstens einen Zeitintervall in Abhängigkeit des ausgebrachten Materials und/oder der ausgebrachten Menge zugeordnet. Mit dieser Ausführungsform wird nicht nur angegeben, ob gerade ein Arbeitsschritt von der landwirtschaftlichen Arbeitsmaschine (beispielsweise eine Feldbearbeitung) durchgeführt wird, sondern auch, welcher Art diese Bearbeitung, insbesondere mit Hinblick auf das ausgebrachte Material und die ausgebrachte Menge, ist. Diese Information kann zur besseren Dokumentation zudem gespeichert werden.

In einer anderen Ausführungsform wird der Pflanzenbestand in der Umgebung der Arbeitsmaschine erfasst und der Arbeitsmodus dem wenigstens einen Zeitintervall basierend auf dem Pflanzenbestand zugeordnet. Der Pflanzenbestand kann allein zu Dokumentationszwecken in die Angabe des Arbeitsmodus einfließen aber auch genutzt werden, um beispielsweise später rechtfertigen zu können, warum zu einer gegebenen Zeit beispielsweise Dünger auf ein Feld ausgebracht wurde.
- Fig. 1: Schematische Darstellung der Bewegung einer landwirtschaftlichen Arbeitsmaschine auf einem Gelände eines landwirtschaftlichen Betriebs.
- Fig. 2: Flussdiagramm einer Ausführungsform des erfindungsgemäßen Verfahrens.
- Fig. 3: Schematische Darstellung der Bewegung einer landwirtschaftlichen Arbeitsmaschine auf einem Gelände eines landwirtschaftlichen Betriebs.

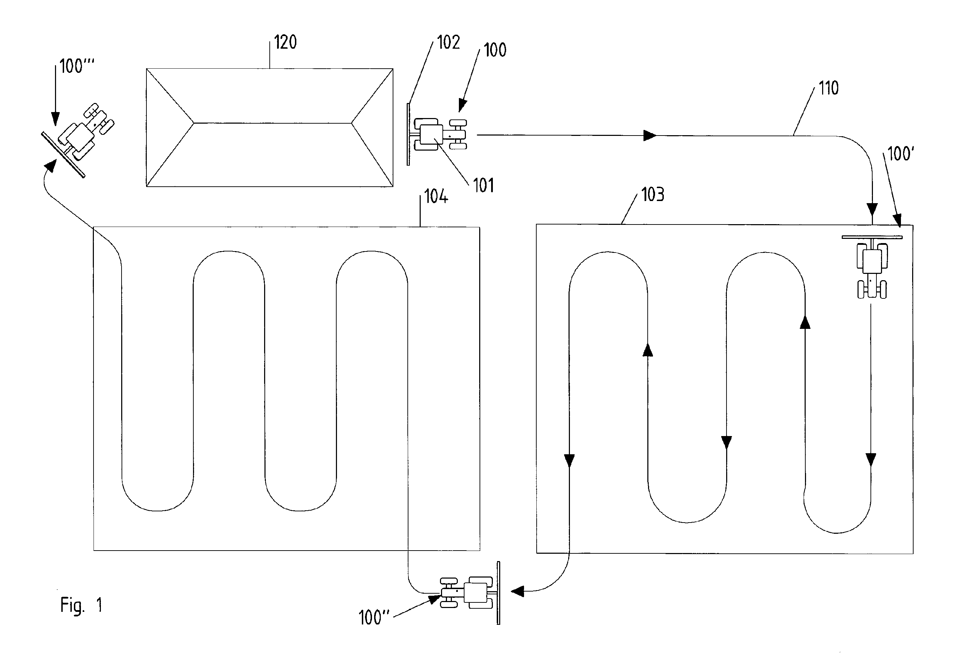

Fig. 1 zeigt eine landwirtschaftliche Arbeitsmaschine 100, umfassend ein Zugfahrzeug 101 und ein Arbeitsgerät 102 an verschiedenen Positionen auf und um zu bearbeitende Felder 103 und 104 sowie um das Betriebsgelände 120 auf dem Gelände des landwirtschaftlichen Betriebs. Ein üblicher Arbeitsablauf einer Arbeitsmaschine 100 wäre beispielsweise, dass die Arbeitsmaschine 100 vom Betriebsgelände 120 aus entlang des dargestellten Weges 110 zu einem ersten Feld 103 fährt. Auf diesem Feld angekommen, beginnt die Arbeitsmaschine am Ort 100' mit der Bearbeitung des Feldes. Unter die Bearbeitung des Feldes kann jede landwirtschaftliche Tätigkeit, wie beispielsweise Pflügen, Ausbringen von Saatgut oder Düngemittel oder Spritzmitteln oder andere Tätigkeiten fallen. Vom Feld 103 aus kann die Arbeitsmaschine entweder wieder zurück zum Betriebsgelände 120 fahren oder aber über die Position 100" auf das nächste zu bearbeitende Feld 104 und die Bearbeitung dieses Feldes durchführen. Ist die Bearbeitung auch dieses Feldes abgeschlossen, so kann die Arbeitsmaschine an der Position 100'" wieder zum Betriebsgelände 120 zurückkehren.

Es ergibt sich also, dass die Arbeitsmaschine vom Verlassen des Betriebsgeländes 120 bis zum Auffahren auf das Feld 103 und dem Beginn der Bearbeitung des Feldes in der Position 100' auf dem entsprechenden Weg nur gefahren ist. Zwischen den Positionen 100' und 100" erfolgte ein Arbeitsschritt, wie eine Feldbearbeitung, beispielsweise Ausbringen von Saatgut. Auf dem Weg von Feld 103 zu Feld 104 hat die Arbeitsmaschine keine weiteren landwirtschaftlichen Arbeiten durchgeführt und ist erneut nur gefahren. Gegebenenfalls hat der Fahrer zwischen den Feldern 103 und 104 eine Pause eingelegt oder notwendiges Material für das Arbeitsgerät, beispielsweise Dünger oder Saatgut, an einer entsprechenden Speichervorrichtung neu aufgefüllt. Zwischen den Positionen 100" und 100'" hat die Arbeitsmaschine erneut das Feld bearbeitet (Feld 104), um anschließend mit der Position 100'" wieder zum Betriebsgelände zurückzufahren.

Um eine Dokumentation dieser Arbeitsabläufe vorzugsweise ohne zusätzlichen Arbeitsaufwand für den Bediener durchführen zu können, ist erfindungsgemäß vorgesehen, dass über einen gegebenen Zeitraum, beispielsweise vom Einschalten bis Ausschalten der Arbeitsmaschine 100 oder vom Abfahren bis Wiedereinfahren in das Betriebsgelände 120, ein Positionssensor die Position der Arbeitsmaschine erfasst. Dabei kann die Erfassung kontinuierlich oder in bestimmten Zeitintervallen (beispielsweise im Abstand einer Sekunde) erfolgen.

Erfindungsgemäß kann nun dem Zeitraum, während dessen die Arbeitsmaschine 100 unterwegs ist Positionsdaten der Arbeitsmaschine zugeordnet und diese dokumentiert werden.

Zur besseren Nachvollziehbarkeit der geleisteten Arbeitsabläufe können zudem bestimmten Zeitintervallen innerhalb des Zeitraums Betriebsmodi der Arbeitsmaschine 100, beispielsweise der Arbeitsmodus, zugeordnet werden.

Die Zuordnung kann erfindungsgemäß über manuelle Eingabe des Benutzers an einem dem elektronischen Zeitmanagement zugeordneten Bedienterminal oder auch per Spracheingabe erfolgen. Hierbei sind verschiedene Eingaben oder Sprachkommandos, wie beispielsweise Arbeitsmodus, Pause, Nachfüllen oder Betanken möglich.

Auch ist denkbar, dass die Information über den derzeitigen Betriebsmodus der Arbeitsmaschine direkt über eine Verbindung mit dem Arbeitsgerät mitgeteilt wird. Kriterien für den Start des Arbeitsmodus wären zum Beispiel bei einem Düngerstreuer das Öffnen eines Schiebers oder die Inbetriebnahme der Streuteller. Bei einer Pflanzenschutzspritze könnte beispielsweise das Ausklappen des Gestänges oder die Inbetriebnahme der Pumpe ein Signal in dem elektronischen Zeitmanagementsystem auslösen, dass der Arbeitsmodus aktiviert wurde. Das Nachfüllen kann beispielweise über das Öffnen eines Tanks oder Behälters signalisiert werden. Die Kommunikation zwischen Zugfahrzeug (101) und Arbeitsgerät (102) kann über eine feste oder steckbare elektronische Verbindung, aber auch über drahtlose Verfahren, wie beispielsweise per WLan oder Bluetooth, erfolgen.

In einer weiteren Ausgestaltung kann das erfindungsgemäße elektronische Zeitmanagementsystem, das der Arbeitsmaschine 100 zugeordnet ist, bestimmten Zeitintervallen des gesamten Zeitraums, in dem die Positionserfassung erfolgt, einen Arbeitsmodus der Arbeitsmaschine zuordnen, ohne dass dies vom Fahrer in Vorgang oder Nachgang an seine Arbeitszeit erfolgen muss.

Dazu wird aus der Position selbst bzw. den Veränderungen der Positionsdaten der Arbeitsmaschine 100 über wenigstens ein Zeitintervall in dem gesamten Zeitraum abgeleitet, in welchem Arbeitsmodus (nur Fahren oder Bearbeiten eines Feldes oder Pausieren oder Beladen des Arbeitsgeräts) sich das Arbeitsgerät in diesem Zeitintervall befindet.

Als Beispiel kann das Fahren des Arbeitsgeräts 100 vom Verlassen des Betriebsgeländes 120 bis zum Auffahren auf das Feld 103 genutzt werden. Vorzugsweise stehen dem elektronischen Zeitmanagementsystem die geografischen Daten der Felder 103 und 104 und des Betriebsgeländes 120 zur Verfügung. Es können natürlich auch weitere, für die Arbeit der Arbeitsmaschine relevante Bezugspunkte hinterlegt sein. Sämtliche umliegenden Bereiche können als normale Fahrwege hinterlegt sein, auf denen eine Feldbearbeitung grundsätzlich nicht stattfindet. Durch Messung der Position der Arbeitsmaschine 100 kann erfasst werden, dass sie sich auf dem Weg 110 zunächst von dem Betriebsgelände 120 entfernt und auf das Feld 103 auffährt. Zwischen den Positionen der Arbeitsmaschine 100 und 100' ist die Arbeitsmaschine 100 also nur gefahren. Der Arbeitsmodus kann für das entsprechende Zeitintervall als "Fahren" angegeben werden. Um vom Betriebsgelände 120 zum Feld 103 zu gelangen, hat die Arbeitsmaschine 100 eine bestimmte Zeit bzw. ein bestimmtes Zeitintervall Δt benötigt. Dieses Zeitintervall entspricht der Zeit zwischen der ersten Positionsmessung, zu der sich die Arbeitsmaschine 100 am Betriebsgelände 120 befand und der Positionsmessung 100', mit der die Arbeitsmaschine auf das Feld 103 auffuhr. Das elektronische Zeitmanagementsystem ordnet dem verstrichenen Zeitintervall Δt dann einen Arbeitsmodus "Fahren" zu.

Diese Zuordnung geschieht aufgrund der kontextbezogenen Auswertung der erfassten Positionsdaten. Dabei wertet das elektronische Zeitmanagementsystem die erfassten Positionsdaten, beispielsweise von einem GPS-Sensor, an der landwirtschaftlichen Arbeitsmaschine 100 mit Bezug auf die in einem Speicher hinterlegten oder über beispielsweise das Internet bereitge-stellten geografischen Informationen über die Felder 103 und 104 und das Betriebsgelände 120 aus. Stellt das elektronische Zeitmanagementsystem fest, dass die Arbeitsmaschine sich auf einem Weg vom Betriebsgelände 120 zum Feld befand und zwischen aufeinanderfolgenden Positionsmessungen eine Positionsveränderung erfahren hat, so erkennt das Zeitmanagementsystem, dass keine Feldbearbeitung erfolgt ist sondern die Arbeitsmaschine 100 nur den Weg 110 entlang vom Betriebsgelände zum Feld gefahren ist. Die Dokumentation dieses Arbeitsschritts kann so automatisch und fehlerfrei erfolgen.

Von der Position 100' aus erfolgt eine Bearbeitung des Feldes 103. Auch hier erkennt das Zeitmanagementsystem aufgrund der hinterlegten Daten zum Feld 103, dass sich die Arbeitsmaschine auf dem Feld 103 befindet. Wird anhand der gemessenen Positionsdaten erkannt, dass sich die Arbeitsmaschine auf dem Feld 103 in Bewegung befindet, so kann das Zeitmanagementsystem aus diesen Informationen schlussfolgern, dass die Arbeitsmaschine in dem Arbeitsmodus der "Feldbearbeitung" betrieben wird. Dieser Arbeitsmodus wird für ein weiteres Zeitintervall Δt' so lange beibehalten werden, bis die erfasste Position durch den Positionssensor dem elektronischen Zeitmanagementsystem angibt, dass die Arbeitsmaschine das Feld 103 verlassen hat oder sich nicht mehr bewegt. In beiden Fällen handelt es sich bei dem entsprechenden Arbeitsmodus dann nicht mehr um die Bearbeitung des Feldes.

Beispielsweise kann nach Verlassen des Feldes 103 die Arbeitsmaschine an der Position 100" zum Stillstand kommen. Der Positionssensor ermittelt dann über ein weiteres Zeitintervall Δt" stets dieselbe Position. Die dem elektronischen Zeitmanagementsystem so übermittelten Daten werden ausgewertet und es wird anhand der hinterlegten Umgebungsdaten festgestellt, dass sich die Arbeitsmaschine im Arbeitsmodus "Pause" befindet. Setzt der Fahrer der Arbeitsmaschine dann seinen Weg fort und fährt auf das Feld 104, so wird zwischen der Position 100" und dem tatsächlichen Auffahren auf das Feld 104 durch Erfassen der Position vom Zeitmanagementsystem wieder geschlussfolgert, dass der Arbeitsmodus "Fahren" eingetreten ist. Dem anschließend folgt ein erneuter Arbeitsmodus "Feldbearbeitung" bei der Bearbeitung des Feldes 104. Dieser Arbeitsmodus wird über einen Zeitintervall beibehalten, das der Zeit entspricht, die zwischen dem Auffahren auf das Feld 104 und dem damit verbundenen Beginn des Arbeitsmodus "Feldbearbeitung" und dem Verlassen des Feldes näherungsweise an der Position 100'" und dem damit zusammenhängenden Ende der "Feldbearbeitung" entspricht.

Das Verfahren gemäß dieser Ausführungsform beinhaltet also das permanente Erfassen bzw. das Erfassen in bestimmten Intervallen der Position der Arbeitsmaschine 100 und das Vergleichen der erfassten Position mit beispielsweise in einem Speicher hinterlegten geografischen Daten über den Einsatzort der Arbeitsmaschine (geografische Daten über die Position der Felder, möglicher Fahrtwege und der Betriebsstätte oder Ähnliches). Anhand dieses Vergleichs schlussfolgert das erfindungsgemäße elektronische Zeitmanagementsystem dann, in welchem Arbeitsmodus sich die Arbeitsmaschine in den Zeitintervallen, die zwischen bestimmten Ereignissen, die mit den geografischen Daten zusammenhängen(Verlassen des Betriebsgeländes, Auffahren auf ein Feld, Verlassen eines Feldes, Fahren bis zum Stillstand, Anfahren aus dem Stillstand bis zum nächsten Ereignis usf.), liegen, befunden hat.

Um dies möglichst einfach umzusetzen, kann vorgesehen sein, dass die Zeitintervalle Δt, die zwischen den einzelnen Ereignissen (Auffahren auf ein Feld und Herunterfahren von einem Feld oder Ähnliches) liegen, sich aus einzelnen Abschnitten zusammensetzen, die sich über zwei aufeinanderfolgende Positionsmessungen ergeben. Dabei werden alle Abschnitte zu einem Zeitintervall Δt zusammengefasst, die dasselbe Resultat hinsichtlich des Arbeitsmodus geliefert haben. Beispielsweise können die ersten hundert gemessenen Abschnitte, die zwischen dem Verlassen des Betriebsgeländes 120 und dem Auffahren auf das Feld 103 liegen, zu dem Ergebnis geführt haben, dass in jedem dieser Abschnitte die Arbeitsmaschine 100 im Arbeitsmodus "Fahren" betrieben wurde. Kommt ein neuer Abschnitt dazu, der sich von einer letzten Positionsmessung zu einer aktuellen Positionsmessung erstreckt, so wird überprüft, ob der Arbeitsmodus "Fahren" immer noch zutrifft. Ist dies der Fall, so wird dieser Abschnitt mit den vorangegangenen Abschnitten zu einem größeren Zeitintervall zusammengefasst, dem der Arbeitsmodus "Fahren" zugeordnet wird. Ist dies nicht der Fall, werden die vorangegangenen Abschnitte abschließend zu einem Zeitintervall zusammengefasst und ihnen der Arbeitsmodus "Fahren" zugeordnet. Dem neuen Abschnitt wird dann der ihm entsprechende Arbeitsmodus, wie beispielsweise "Feldbearbeitung" zugeordnet. Bei jedem weiteren Abschnitt wird überprüft, ob der Arbeitsmodus immer noch derselbe ist und das entsprechende Zeitintervall wächst so lange an, bis sich der Arbeitsmodus ändert.

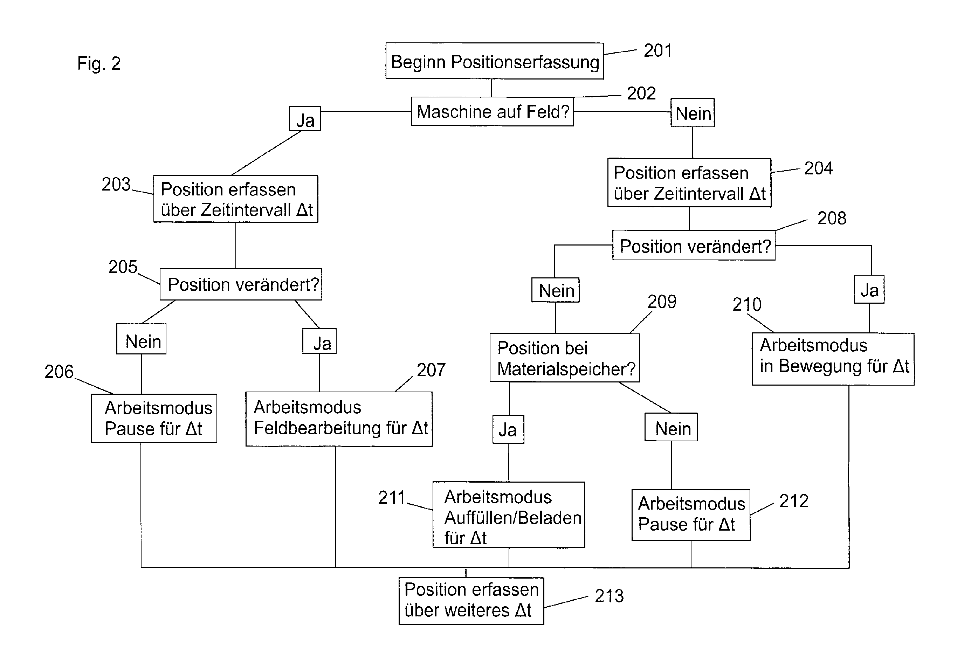

Dies ist nochmals in Fig. 2 in Form eines Fließschemas beschrieben.

In einem ersten Schritt beginnt die Positionserfassung 201. Dies kann durch Einschalten des elektronischen Zeitmanagementsystems durch den Bediener der Arbeitsmaschine erfolgen oder automatisch bei Einschalten der Stromversorgung der Arbeitsmaschine. Die Positionserfassung durch den vorgesehenen Positionssensor erfolgt dann von diesem Zeitpunkt an kontinuierlich oder in kleineren Zeitabschnitten, wie oben beschrieben, bis die Positionserfassung ausgeschaltet wird. In einem nächsten Schritt prüft das elektronische Zeitmanagementsystem nun anhand der Positionsdaten und der im Speicher hinterlegten Daten über die Umgebung, ob sich die Maschine auf dem Feld befindet 202. Dabei kann das elektronische Zeitmanagementsystem vorzugsweise nicht nur unterscheiden, ob sich die Maschine auf einem landwirtschaftlichen Feld oder auf Fahrtwegen dorthin bzw. von dort befindet, sondern weiterhin auch, auf welchem Feld sich die Arbeitsmaschine befindet. Dies erlaubt eine deutlich genauere Dokumentation der Arbeitsvorgänge im landwirtschaftlichen Betrieb, da z.B. nicht nur erfasst wird, dass eine bestimmte landwirtschaftliche Arbeitsmaschine ein Feld bearbeitet hat sondern auch, welches Feld bearbeitet wurde. So können Doppelbearbeitungen vermieden werden.

Befindet sich die landwirtschaftliche Arbeitsmaschine auf dem Feld bzw. auf einem der Felder des landwirtschaftlichen Betriebs, so wird zunächst vom Zeitmanagementsystem festgehalten, dass die Position der Arbeitsmaschine auf dem Feld ist. Die Position der Arbeitsmaschine wird dann in einem weiteren Schritt 203 über ein Zeitintervall Δt erfasst. Es wird dann mit der vorherigen Position, wie vorher beschrieben, verglichen und überprüft, ob sich die Position verändert hat 205. Ist dies der Fall, so wird für das Zeitintervall Δt der Arbeitsmodus auf "Feldbearbeitung" gesetzt 207. Ist dies nicht der Fall, hat sich also die Position nicht verändert, so wird im Schritt 206 der Arbeitsmodus "Pause" dem Zeitintervall Δt zugeordnet. Es erfolgt dann, wie weiter oben beschrieben, eine erneute Positionserfassung über ein weiteres Zeitintervall Δt im Schritt 213. Abhängig von dem Resultat wird entweder das eben beschriebene Zeitintervall auch mit dem neuen Zeitintervall zusammengefasst unter einem Arbeitsmodus oder aber die Zeitintervalle werden separat hinterlegt, da sie unterschiedlichen Arbeitsmodi zugeordnet sind.

Wird in Schritt 202 festgestellt, dass sich die Maschine nicht auf einem Feld befindet, so wird im Schritt 204 eine Positionserfassung über ein Zeitintervall Δt oder einen entsprechenden Abschnitt vorgenommen. Es wird auch dann in Schritt 208 überprüft, ob sich die Position im Vergleich zu der vorherigen erfassten Position verändert hat. Ist dies der Fall, so wird dem entsprechenden Zeitintervall Δt im Schritt 210 der Arbeitsmodus "in Bewegung" oder "Fahren" zugeordnet. Dem anschließend erfolgt in Schritt 213 eine erneute Positionserfassung.

Wird in Schritt 208 festgestellt, dass sich die Position nicht verändert hat, so kann, da sich die Arbeitsmaschine außerhalb eines Feldes befindet, in Frage kommen, dass die Arbeitsmaschine bzw. der Bediener entweder eine Pause einlegt oder die Arbeitsmaschine steht, da sie zum Auffüllen oder Beladen zu einem entsprechenden Materialspeicher gefahren wurde. Es wird daher in Schritt 209 überprüft, ob die gemessene Position der Position eines im landwirtschaftlichen Betrieb aufgestellten Materialspeichers entspricht oder nah bei dieser Position verortet ist. Ist dies der Fall, so wird der Arbeitsmodus für dieses entsprechende Zeitintervall auf "Füllen/Beladen" gesetzt 211. Ist dies nicht der Fall, wird in Schritt 212 der Arbeitsmodus "Pause" dem Zeitintervall Δt zugeordnet. In beiden Fällen erfolgt anschließend im Schritt 213 eine erneute Positionserfassung, wobei das nachfolgende Zeitintervall bzw. der nachfolgende Zeitabschnitt entweder dem vorherigen Zeitabschnitt zugeordnet wird, da derselbe Arbeitsmodus vorliegt oder beide Zeitabschnitte oder Zeitintervalle Δt getrennt voneinander hinterlegt werden.

Bei Durchführung des Verfahrens gemäß Fig. 2 ergibt sich also über den gesamten Zeitraum, in dem die Position der Arbeitsmaschine gemessen wird, eine Vielzahl von Zeitintervallen, wobei einige dieser Zeitintervalle zusammenhängend einem Arbeitsmodus zugeordnet werden können. So ergibt sich eine Dokumentation des Betriebs der landwirtschaftlichen Arbeitsmaschine über die gesamte Positionsmessung bzw. den gesamten Zeitraum der Positionsmessung hinweg, die sowohl die Zeitintervalle erfasst, in denen eine Feldbearbeitung oder ein Betrieb der Arbeitsmaschine erfolgt als auch Stillstand- oder Pausenzeiten oder Befüllzeiten für beispielsweise Düngemittel oder Saatgut. Weiterhin werden die benötigten Zeiten für Fahrtwege zum Feld oder vom Feld erfasst. Diese Daten werden vorzugsweise in einem dem elektronischen Zeitmanagementsystem zugeordneten nichtflüchtigen Speicher, wie einer Festplatte oder auf einem USB-Stick, gespeichert. Diese können dann in vorteilhafter Weise aus der landwirtschaftlichen Arbeitsmaschine bzw. aus dem elektronischen Zeitmanagementsystem exportiert werden und zur weiteren Bearbeitung beispielsweise auf einen Computer übertragen werden. Auch ist denkbar, die Daten durch drahtlose Übertragung beispielsweise mittels Internetverbindung, Bluetooth, Wlan oder ähnliche Techniken zu exportieren.

Die Einteilung der Arbeitsmodi auf Grundlage der Position der landwirtschaftlichen Arbeitsmaschine allein bzw. auf Grundlage der Veränderung der Position der landwirtschaftlichen Arbeitsmaschine erleichtert zwar die Dokumentation der groben Abläufe in einem landwirtschaftlichen Betrieb, kann jedoch für manche Zwecke nicht genau genug sein.

Zu diesem Zweck kann vorgesehen sein, dass nicht nur die Position sondern auch die Geschwindigkeit und/oder die Beschleunigung der Arbeitsmaschine während des gesamten Zeitraums durch entsprechende Geschwindigkeits- und/oder Beschleunigungssensoren an der landwirtschaftlichen Arbeitsmaschine erfasst werden. Das Erfassen dieser Informationen zusätzlich zur Position ermöglicht eine genauere Aussage hinsichtlich des Arbeitsmodus. Als Beispiel wird die Bewegung einer landwirtschaftlichen Arbeitsmaschine über ein Feld herangezogen. Folgt die landwirtschaftliche Arbeitsmaschine nicht dem in Fig. 1 beschriebenen Weg über das Feld, womit es eine vollständige Bearbeitung des Feldes 103 ermöglichen würde, sondern fährt beispielsweise nur quer über das Feld und zwar mit einer relativ hohen Geschwindigkeit, so ist es unwahrscheinlich, dass der Fahrer der Arbeitsmaschine eine Bearbeitung des Feldes durchführt. Das Überfahren des Feldes kann beispielsweise notwendig sein, um auf ein dahinterliegendes Feld zu gelangen. Berücksichtigt das elektronische Zeitmanagementsystem jedoch nur die aufgenommenen Positionsdaten, so würde beim Überfahren des Feldes das Zeitmanagementsystem den Arbeitsmodus "Feldbearbeitung" einstellen bzw. dem entsprechenden Zeitintervall zuordnen, obwohl hier gar keine Bearbeitung stattfindet.

Wird jedoch die Geschwindigkeit zusätzlich zur Position gemessen, so lässt sich beispielsweise bei sehr hoher Geschwindigkeit der Arbeitsmaschine schlussfolgern, dass keine Feldbearbeitung erfolgt und das elektronische Zeitmanagementsystem ordnet dem entsprechenden Zeitintervall den Arbeitsmodus "Fahren" zu. Weiterhin kann auf Grundlage der Geschwindigkeit oder Beschleunigung sogar unterschieden werden, welche Art von Feldbearbeitung erfolgt. Da das Ausbringen von Dünger oder Spritzmittel sowie das Ausbringen von Saatgut oder das Umpflügen des Feldes teilweise mit völlig unterschiedlichen Geschwindigkeiten zu erfolgen hat, kann das elektronische Zeitmanagementsystem, basierend auf den Positionsdaten und der Geschwindigkeit, zusätzlich zum Arbeitsmodus "Feldbearbeitung" auch "Ausbringen von Dünger", "Ausbringen von Saatgut", "Ausbringen von Spritzmittel", ... angeben, was den momentanen Arbeitsmodus der Arbeitsmaschine konkretisiert. So wird die Dokumentation der Arbeitsabläufe im landwirtschaftlichen Betrieb weiter verbessert.

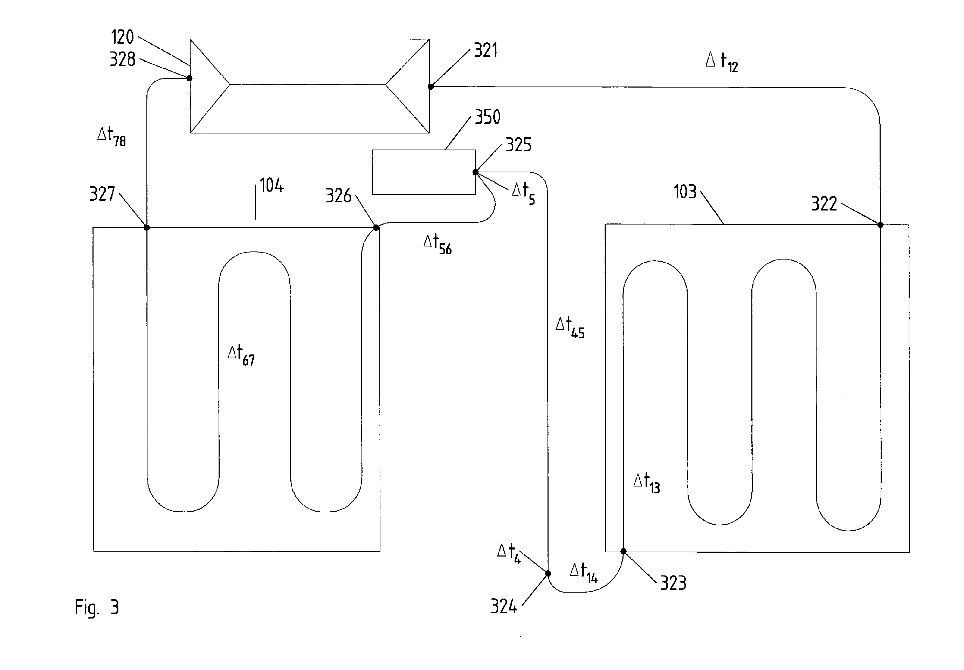

In einer weiteren Ausführungsform, die in Fig. 3 und der untenstehenden Tabelle dargestellt ist, wird das Verfahren bzw. das elektronische Zeitmanagementsystem um Sensoren bezüglich des Arbeitsgeräts erweitert. Diese Sensoren können direkt am Arbeitsgerät oder an einer Verbindungsstelle von Arbeitsgerät und Zugmaschine angeordnet sein. Zu diesen Sensoren zählen Sensoren, die die Art und Menge von ausgebrachtem Material bestimmen können und Signalgeber, die dem elektronischen Zeitmanagementsystem mitteilen können, welches Arbeitsgerät (beispielsweise Pflug, Sämaschine, Düngerstreuer, Feldspritze etc.) gerade verwendet wird. Die Informationen über das verwendete Arbeitsgerät und/oder über die Art des ausgebrachten Materials und dessen Menge können in vorteilhafter Weise genutzt werden, um die angestrebte Dokumentation des gesamten Arbeitsablaufs über den Zeitraum noch genauer zu gestalten. Der für Fig. 3 relevante Zeitraum erstreckt sich über das Abfahren der Arbeitsmaschine am Punkt 321 in der Nähe des Betriebsgeländes 120 bis zum erneuten Einfahren in das Betriebsgelände am Punkt 328. Dieser Zeitraum entspricht also dem kompletten Arbeitsverlauf, der im Folgenden beschrieben wird. Es können auch kürzere Zeiträume gewählt werden, wie weiter oben beschrieben wurde. Grundsätzlich ist die Wahl der Zeiträume beliebig.

**Tabelle 1**

| Zeitint ervall | Arbeitsmodus | Geschwindigkeit | Genutztes Arbeitsgerät | Ausgebrachtes Material/Materialmenge | Zusatzinformation |
|---|---|---|---|---|---|
| Δt₁₂ | Fahren | 10km/h | - | - | Fahren zum Feld 103 |
| Δt₂₃ | Feldbearbeitung | 5km/h | Düngerstreuer | Dünger; 50kg Verbrauch | |
| Δt₃₄ | Fahren | 12km/h | - | - | |
| Δt₄ | Pause | 0km/h | - | - | |
| Δt₄₅ | Fahren | 10km/h | - | - | |
| Δt₅ | Befüllen | 0km/h | Düngerstreuer | Dünger; 100kg aufgefüllt | |
| Δt₅₆ | Fahren | 8km/h | - | - | Fahren zum Feld 104 |
| Δt₆₇ | Feldbearbeitung | 5km/h | Düngerstreuer | Dünger; 75kg | |
| Δt₇₈ | Fahren | 14km/h | - | - | Fahren zum Betriebsgelände 120 |

Auf der Strecke vom Punkt 321 bis zur Auffahrt auf das Feld 322 und dem zugehörigen Zeitintervall Δt₁₂ erkennt das Zeitmanagementsystem aufgrund der Position in Relation zum gesamten landwirtschaftlichen Gelände, dass sich die landwirtschaftliche Arbeitsmaschine auf einem Fahrtweg befindet und kann den Arbeitsmodus "Fahren" zuordnen. Da die Positionsdaten erfasst werden und die Arbeitsmaschine am Punkt 322 auf das Feld auffährt, kann als zusätzliche Information zu dem allgemeinen Arbeitsmodus "Fahren" hinterlegt werden, dass die Arbeitsmaschine zum Feld 103 fährt. Zusätzlich kann hinterlegt werden, dass der Startpunkt das Betriebsgelände 120 war.

Vom Punkt 322, also der Auffahrt auf das Feld, bis zum Punkt 323 verstreicht das Zeitintervall Δt₂₃. Dies wird aufgrund der Position der landwirtschaftlichen Arbeitsmaschine auf dem Feld 103 von dem elektronischen Zeitmanagementsystem dem Arbeitsmodus "Feldbearbeitung" zugeordnet. Aufgrund der zusätzlich vorgesehenen Sensoren kann anstelle oder zusätzlich zum allgemeinen Arbeitsmodus "Feldbearbeitung" hinterlegt werden, dass Saatgut ausgebracht wurde oder Düngemittel oder Ähnliches. Vom Punkt 323 zum Punkt 324 erfolgt eine Bewegung vom Feld 103 weg, wobei der Zielpunkt 324, der nach dem Zeitintervall Δt₃₄ erreicht wird, nicht auf einem weiteren Feld liegt. Zumindest diesem Zeitintervall wird also der Arbeitsmodus "Fahren" zugeordnet.

In der beispielhaften Darstellung von Fig. 3 stoppt das Fahrzeug am Punkt 324 und der Bediener führt eine Pause durch, die die Zeit Δt₄ in Anspruch nimmt. Die Position des Fahrzeugs verändert sich hier nicht. Dies wird vom elektronischen Zeitmanagementsystem daher, wie beispielsweise in Fig. 2 beschrieben, als Stillstandzeit gewertet. Da weiterhin anhand der Positionsdaten der Arbeitsmaschine in Relation zum landwirtschaftlichen Betriebsgelände vom elektronischen Zeitmanagementmodul erkannt wird, dass kein weiterer Arbeitsschritt, wie das Nachfüllen von Düngemittel, erfolgt (dies kann beispielsweise auch durch die für das Arbeitsgerät vorgesehenen zusätzlichen Sensoren verifiziert werden), wird für diese Zeit der Arbeitsmodus "Pause" zugeordnet.

Vom Punkt 324 setzt der Fahrer die Arbeitsmaschine dann erneut in Bewegung und fährt zum Punkt 325 während des Zeitintervalls Δt₄₅. Da das elektronische Zeitmanagementsystem anhand der Positionsdaten der Arbeitsmaschine vom Punkt 324 bis zum Punkt 325 erkennt, dass sich die Arbeitsmaschine nicht auf einem Feld befindet, wird der Arbeitsmodus hier auf "Fahren" gesetzt. Dabei kann das Zuordnen dieses Arbeitsmodus auch unterstützt durch die zusätzlichen für das Arbeitsgerät vorgesehenen Sensoren erfolgen, da diese während dieser Fahrt kein Ausbringen von Materialien oder keinen Betrieb des Arbeitsgeräts feststellen. Gerade bei dicht beieinander liegenden Feldern und schmalen Fahrgassen verringert diese doppelte Absicherung durch die Positionsdaten einerseits und die Sensordaten andererseits, dass es zu Fehleinschätzungen durch das elektronische Zeitmanagementsystem kommt. So wird durch die Positionsdaten aber auch durch die Sensoren der Arbeitsmaschine verifiziert, dass es sich bei der Bewegung der Arbeitsmaschine um eine reine Fortbewegung vom Punkt 324 zum Punkt 325 handelt.

Im Punkt 325 steht die Arbeitsmaschine nun erneut still und zwar für das Zeitintervall Δt₅. Da die Arbeitsmaschine hier in der Nähe einer Nachfüllanlage für beispielsweise Düngemittel 350 stillsteht, kann das zentrale Zeitmanagementsystem anhand dieser Positionsdaten schlussfolgern, dass es sich im Zeitintervall Δt₅ nicht um eine Pause sondern um ein Nachfüllen beispielsweise des Düngerbehälters des Arbeitsgeräts der Arbeitsmaschine handelt. Der Arbeitsmodus kann somit auf "Befüllen" gesetzt sein. Auch dieser Arbeitsmodus kann durch die Sensoren des Arbeitsgeräts bestätigt werden, da diese beispielsweise ein Auffüllen des Saatgutbehälters oder des Düngemittelbehälters registrieren. Eine fehlerhafte Einschätzung des Arbeitsmodus als "Pause" wird so verhindert. Gleichsam wird verhindert, dass bei einer Positionierung in der Nähe der Nachfüllstation 350 zum Zweck einer Pause fälschlicherweise das Befüllen des Saatgutbehälters oder Ähnliches als Arbeitsmodus für das Zeitintervall Δt₅ hinterlegt wird, da in einem solchen Fall die entsprechenden Sensoren kein Auffüllen des Behälters des Arbeitsgeräts registrieren würden.

Auf dem Weg vom Punkt 325 zum Punkt 326, auf dem ein erneutes Auffahren auf das Feld 104 erfolgt, wird das elektronische Zeitmanagementsystem erneut den Arbeitsmodus "Fahren" für das Zeitintervall Δt₅₆ hinterlegen, wobei anhand des Punkts 326 die zusätzliche Information hinterlegt werden kann, dass die Arbeitsmaschine auf das Feld 104 zufährt.

Während der Fahrt über das Feld 104 zwischen den Punkten 326 und 327 und dem entsprechenden Zeitintervall Δt₆₇ kann das elektronische Zeitmanagementsystem dann anhand der Positionsdaten und/oder der Daten der Sensoren des Arbeitsgeräts feststellen, dass der Arbeitsmodus "Feldbearbeitung" dem Zeitintervall Δt₆₇ zuzuordnen ist. Wie bereits mit Bezug auf das Intervall Δt₂₃ beschrieben, kann hier zusätzlich die Information hinterlegt werden, welche Art von Bearbeitung erfolgt. Dies ist besonders dann hilfreich, wenn an der Station 350 nicht nur ein Auffüllen des Behälters der Arbeitsmaschine erfolgt sondern ein Austausch des Arbeitsgeräts, so dass auf dem Feld 103 eine erste Feldbearbeitung (beispielsweise Ausbringen von Dünger) und auf dem zweiten Feld 104 eine zweite Feldbearbeitung (beispielsweise Ausbringen von Saatgut) erfolgt.

Nach Verlassen des Feldes 327 bewegt sich die Arbeitsmaschine im Zeitintervall Δt₇₈ dann wieder zurück zum Betriebsgelände 120 bis zum Punkt 328. An dieser Stelle kann die Dokumentation durch das elektronische Zeitmanagementsystem gestoppt werden.

Zusammenfassend ergibt sich die obenstehende Tabelle 1, die eine Dokumentation des gesamten Arbeitsablaufs enthält. Dabei kann der Detailgrad je nach vorgesehenen Sensoren variieren und beispielsweise zusätzlich zum Arbeitsmodus, wie oben beschrieben, detailliertere Ausführungen hinsichtlich des ausgebrachten Materials oder zusätzliche Informationen hinsichtlich der Geschwindigkeit der Arbeitsmaschine enthalten. Dies ist abhängig davon, welche Sensoren dem elektronischen Zeitmanagementsystem zugeordnet werden. Die in der Tabelle dargestellten Werte und Angaben sind somit nur als beispielhaft zu verstehen. Ebenso ist die beschriebene Einteilung der Arbeitsmodi zwar bevorzugt, aber nicht beschränkend zu verstehen. Es können weitere oder andere Arbeitsmodi gewählt werden. Weiterhin können für ähnliche oder dieselben Arbeitsmodi auch andere Bezeichnungen gewählt werden.

Es kann weiterhin vorgesehen sein, dass nicht nur Sensoren bereitgestellt werden, die die Bewegung oder die von der Arbeitsmaschine ausgeführte Arbeit erfassen sondern zusätzlich den Pflanzenbestand auf den Feldern 103 und 104. Dazu können optische Sensoren, wie Kameras oder Laser eingesetzt werden. Diese können sowohl die Höhe als auch die Qualität, beispielsweise Dichte oder Art des Pflanzenbestands, erfassen. Diese Information kann vom elektronischen Zeitmanagementsystem zusätzlich in die Dokumentation eingefügt werden. Dies betrifft natürlich nur Arbeitsmodi und entsprechende Zeitintervalle, in denen tatsächlich eine Feldbearbeitung stattfand.

In einer weiteren Ausgestaltung ist vorgesehen den Zeitintervallen aktuelle Wetterdaten zuzuordnen und zu speichern. Diese können beispielsweise über an der Arbeitsmaschine 100 befindliche Sensoren für zum Beispiel Temperatur oder Niederschlag gewonnen werden. Auch ist vorgesehen diese Daten positionsbezogen über eine Verbindung zum Internet zu beziehen.

Insgesamt erlaubt das elektronische Zeitmanagementsystem eine vollautomatische Dokumentation des gesamten Arbeitsablaufs der Arbeitsmaschine über den Zeitraum, während dessen das elektronische Zeitmanagementsystem eingesetzt wird. Dabei sind je nach vorgesehenen Sensoren nur wenige bis gar keine Eingaben des Benutzers erforderlich, so dass die Dokumentation vollautomatisch im Hintergrund während der Durchführung sämtlicher Arbeiten mit der Arbeitsmaschine erfolgen kann. Zu Auswertungszwecken kann vorgesehen sein, dass die Dokumentation beispielsweise in Form einer Excel-Tabelle als Datei auf einem USB-Stick oder ähnlichem nicht flüchtigen Speicher gespeichert und von einem Computer oder Ähnlichem zu weiteren Bearbeitungszwecken ausgelesen werden kann.

## Patentansprüche

1. Elektronisches Zeitmanagementsystem einer landwirtschaftlichen Arbeitsmaschine(100), umfassend ein Positionsmodul zum Erfassen einer Position der landwirtschaftlichen Arbeitsmaschine (100) über einen Zeitraum, **dadurch gekennzeichnet, dass** das Zeitmanagementsystem zur automatischen Dokumentation des Arbeitsprozesses den Zeitraum sowie die jeweils überfahrene Fläche speichert.

2. Elektronisches Zeitmanagementsystem nach Anspruch 1 **dadurch gekennzeichnet, dass** der jeweilige Betriebsmodus der Arbeitsmaschine durch manuelle Eingabe des Benutzers festgelegt und durch das Zeitmanagementsystem zusammen mit dem durch den vom Benutzer initiierten Wechsel des Arbeitsmodus und/oder den Beginn und/oder das Ende des Zeitraums definierten Zeitintervall innerhalb des Zeitraums sowie der jeweils überfahrenen Fläche dokumentiert wird.

3. Elektronisches Zeitmanagementsystem nach zumindest einem der vorstehenden Ansprüche, **dadurch gekennzeichnet, dass** dem elektronischen Zeitmanagementsystem manuell und/oder elektronisch Informationen über ein mit dem Zugfahrzeug (101) während des Zeitraums verbundenes Arbeitsgerät (102) übermittelt wird und das elektronische Zeitmanagementsystem dem wenigstens einen Zeitintervall innerhalb des Zeitraums basierend auf der Information über das Arbeitsgerät (102) den jeweiligen Arbeitsmodus zuordnet.

4. Elektronisches Zeitmanagementsystem nach zumindest einem der vorstehenden Ansprüche, **dadurch gekennzeichnet, dass** das Zeitmanagementsystem auf Grundlage der erfassten Position einem oder mehreren Zeitintervallen in dem Zeitraum einen Arbeitsmodus der Arbeitsmaschine (100) zuordnen kann.

5. Elektronisches Zeitmanagementsystem nach zumindest einem der vorstehenden Ansprüche, **dadurch gekennzeichnet, dass** das Positionsmodul einen GPS-Sensor umfasst.

6. Elektronisches Zeitmanagementsystem nach zumindest einem der vorstehenden Ansprüche, **dadurch gekennzeichnet, dass** das Positionsmodul einen Geschwindigkeitssensor und/oder einen Beschleunigungssensor umfasst und das Zeitmanagementsystem basierend auf der erfassten Geschwindigkeit und/oder der erfassten Beschleunigung den Arbeitsmodus bestimmen kann.

7. Elektronisches Zeitmanagementsystem nach zumindest einem der Ansprüche 1 bis 6, **dadurch gekennzeichnet, dass** dem elektronischen Zeitmanagementsystem ein nichtflüchtiger Speicher zugeordnet ist, in dem die Zeitintervalle und die zugeordneten Arbeitsmodi gespeichert werden können.

8. Elektronisches Zeitmanagementsystem nach zumindest einem der vorstehenden Ansprüche, **dadurch gekennzeichnet, dass** ein Mengensensor vorgesehen ist, der eine Menge an auf ein Feld ausgebrachtem Material messen kann, wobei der Arbeitsmodus dem Zeitintervall in Abhängigkeit des ausgebrachten Materials und/oder der ausgebrachten Menge zugeordnet werden kann.

9. Elektronisches Zeitmanagementsystem nach Anspruch 8 **dadurch gekennzeichnet, dass** die Information über die ausgebrachte Menge Material pro Fläche positions- und/oder zeitintervallbezogen dokumentiert wird.

10. Elektronisches Zeitmanagementsystem nach einem zumindest einem der vorstehenden Ansprüche, **dadurch gekennzeichnet, dass** dem Zeitmanagementsystem ein optischer Sensor zugeordnet ist, der den Pflanzenbestand erfassen kann und das Zeitmanagementsystem dem wenigstens einen Zeitintervall den Arbeitsmodus basierend auf dem erfassten Pflanzenbestand zuordnen kann.

11. Elektronisches Zeitmanagementsystem nach zumindest einem der vorstehenden Ansprüche, **dadurch gekennzeichnet, dass** Wetterinformationen erfasst mittels an der Arbeitsmaschine befindlicher Sensoren, wie Thermometer oder Regensensor, oder bezogen über das Internet positionsbezogen dokumentiert werden.

12. Elektronisches Zeitmanagementsystem nach zumindest einem der vorstehenden Ansprüche, **dadurch gekennzeichnet, dass** mittels Sensoren gewonnene Informationen über die Bodenbeschaffenheit des Feldes, beispielsweise die Stickstoffkonzentration, positionsbezogen dokumentiert werden.

13. Zeitmanagementverfahren für eine landwirtschaftliche Arbeitsmaschine, wobei die Position der Arbeitsmaschine (100) über einen Zeitraum erfasst wird, **dadurch gekennzeichnet, dass** zur automatischen Dokumentation des Arbeitsprozesses der Zeitraum sowie die bearbeitete Fläche automatisch gespeichert werden.

14. Zeitmanagementverfahren nach Anspruch 13, **dadurch gekennzeichnet, dass** der jeweilige Betriebsmodus dem Zeitmanagementsystem durch manuelle Eingabe des Benutzers übermittelt und durch das Zeitmanagementsystem zusammen mit dem durch den jeweiligen Wechsel des Betriebsmodus und/oder den Beginn und/oder das Ende des Zeitraums definierten Zeitintervall innerhalb des Zeitraums sowie der jeweils überfahrenen Fläche dokumentiert wird.

15. Zeitmanagementverfahren nach Anspruch 13, **dadurch gekennzeichnet, dass** dem elektronischen Zeitmanagementsystem manuell und/oder elektronisch Informationen über ein mit dem Zugfahrzeug (101) während des Zeitraums verbundenes Arbeitsgerät (102) übermittelt werden kann und das elektronische Zeitmanagementsystem dem wenigstens einen Zeitintervall basierend auf der Information über das Arbeitsgerät (102) einen Arbeitsmodus zuordnen kann.

16. Zeitmanagementverfahren nach Anspruch 13, **dadurch gekennzeichnet, dass** dem Zeitmanagementsystem über manuelle Eingabe und/oder elektronisch Informationen über das Arbeitsgerät (102) übermittelt werden und der Arbeitsmodus dem wenigstens einen Zeitintervall in Abhängigkeit der Informationen zugeordnet wird.

17. Zeitmanagementverfahren nach Anspruch 13, **dadurch gekennzeichnet, dass** basierend auf der erfassten Position einem oder mehreren Zeitintervallen innerhalb des Zeitraums ein Arbeitsmodus der Arbeitsmaschine zugeordnet wird.

18. Zeitmanagementverfahren nach Anspruch 13, **dadurch gekennzeichnet, dass** die Geschwindigkeit und/oder die Beschleunigung der Arbeitsmaschine innerhalb des Zeitraums erfasst wird und der Arbeitsmodus basierend auf der erfassten Geschwindigkeit und/oder der erfassten Beschleunigung dem wenigstens einen Zeitintervall zugeordnet wird.

19. Zeitmanagementverfahren nach zumindest einem der Ansprüche 13 bis 18, **dadurch gekennzeichnet, dass** der Arbeitsmodus eines von Feldbearbeitung, Pause, Fahren, Beladen des Arbeitsgeräts ist.

20. Zeitmanagementverfahren nach einem der Ansprüche 13 bis 19, **dadurch gekennzeichnet, dass** die Zeitintervalle und der ihnen jeweils zugeordnete Arbeitsmodus in einem nichtflüchtigen Speicher gespeichert werden.

21. Zeitmanagementverfahren nach einem der Ansprüche 13 bis 20, **dadurch gekennzeichnet, dass** innerhalb des Zeitraums eine Menge an ausgebrachtem Material bestimmt wird und dem Zeitintervall zugeordnet wird.

22. Zeitmanagementverfahren nach Anspruch 13, **dadurch gekennzeichnet, dass** der Arbeitsmodus dem wenigstens einen Zeitintervall in Abhängigkeit des ausgebrachten Materials und/oder der ausgebrachten Menge zugeordnet wird.

23. Elektronisches Zeitmanagementverfahren nach einem der Ansprüche 13 bis 22 **dadurch gekennzeichnet, dass** die Information über die ausgebrachte Menge Material pro Fläche positionsbezogen dokumentiert wird.

24. Zeitmanagementverfahren nach einem der Ansprüche 13 bis 23, **dadurch gekennzeichnet, dass** der Pflanzenbestand in der Umgebung der Arbeitsmaschine (100) erfasst wird und der Arbeitsmodus dem wenigstens einen Zeitintervall basierend auf dem Pflanzenbestand zugeordnet wird.
